# EUROPÄISCHE PATENTSCHRIFT

(11) **EP 0 610 562 B1**
(45) Veröffentlichungstag und Bekanntmachung des Hinweises auf die Patenterteilung: **29.05.1996**
(21) Anmeldenummer: 93119084.7
(22) Anmeldetag: 26.11.1993
(51) Int. Cl.: H02K 11/00, H02K 5/132, H02K 5/128

(54) **Übertemperatur- und Anlaufsicherung in Pumpen mit Permanent-Kupplungen**
Excess temperature and start safety device in pumps comprising permanent magnetic clutches
Dispositif de sécurité contre le suréchauffement et pour le démarrage dans des pompes avec embrayages à aimants permanents

(30) Priorität: 09.02.1993 DE 4303629
(43) Veröffentlichungstag der Anmeldung: 17.08.1994
(73) Patentinhaber: Dickow Pumpen KG, 84478 Waldkraiburg (DE)
(72) Erfinder: Horvath, Stefan, D-4500 Dessau (DE); Schmidt, Karl, D-8264 Waldraiburg (DE); Schommer, Henry, D-8261 Jettenbach (DE); Fiedler, Gerhard, D-4507 Dessau (DE)
(74) Vertreter: Lehmann, Klaus

(56) Entgegenhaltungen:
- EP-A- 0 510 362
- DE-A- 2 251 928
- DE-B- 2 315 191

## Beschreibung

Die Erfindung betrifft eine Magnetkreiselpumpe mit einer Übertemperatur- und Anlaufsicherung und einem das Medium fördernden Laufrad, dessen Welle an einem Spalttopf endet und dort Permanentmagnete trägt, die von an der anderen Seite des Spalttopfes liegenden Permanentmagneten angetrieben sind, die mit der Welle des Antriebsmotors verbunden sind.

Der Einsatz von Pumpen mit Permanentmagnetkupplungen erfolgt überall dort, wo Leckagen nicht zulässing sind, d.h. bei Förderung giftiger, explosiver und allgemein umweltbelastender Medien, sowie auch dort, wo gegenüber herkömmlichen Pumpen mit doppeltwirkenden Gleitringdichtungen ein hohes Maß an Verfügbarkeit und Wartungsfreiheit erzielt werden soll. Die Betriebssicherheit derartiger Pumpen erfordert daher ein zuverlässig und wartungsfrei arbeitendes Überwachungssystem.

Es ist z.B. aus dem Prospekt "Chemienormpumpen mit Magnetantrieb", 1991 der Firma Dickow KG, bekannt, daß diese Pumpen bei Betrieb im metallischen, antimagnetischen Spalttopf Wirbelströme erzeugen, die eine Erwärmung des Produktes im Spalt zwischen Rotor und Spalttopf bewirken. Diese Wärme wird durch einen internen Zirkulationsstrom abgeführt, so daß ein Verdampfen des Fördermediums in diesem Bereich unter normalen Betriebsbedingungen ausgeschlossen ist. In einem Störfall, bei dem das Fördermedium entweder nicht zugeführt (Trockenlauf) oder der innere Zirkulationsstrom unterbrochen wird, bzw. sich staut (Betrieb gegen geschlossenes druckseitiges Drosselorgan), erhitzt sich an der kritischen Stelle der Spalttopf auf Temperaturen bis mehrere hundert Grad, was zur Zerstörung der Gleitlagerung und zur Polymerisation bzw. bis zur Explosion des Mediums führen kann.

Aufgrund des starken elektromagnetischen Feldes und aus konstruktiven Gründen wurde die Temperatur des Spalttopfes unter den drehenden Magneten bisher in derartigen Pumpen nie überwacht. Die Standardtemperaturfühler, wie Widerstände oder Thermoelemente wurden von der Wärmequelle, d.h. vom Zentrum der Magnetelemente soweit entfernt angeordnet, daß durch die schlechte Wärmeleitfähigkeit der antimagnetischen Spalttopfwerkstoffe die tatsächlich auftretenden Temperaturen nicht erfaßt, bzw. überwacht wurden. Trotz dieser Temperaturüberwachungen sind daher die Gefahren der Folgen des Störbetriebes immer vorhanden. Bisher wurde bei derartigen Pumpen zusätzlich zu den Spalttopftemperaturfühlern eine Anlaufsicherung zur Wälzlagerüberwachung eingebaut.

Sie schützt den Spalttopf bei ausgeschlagenen und exzentrischem Lauf der äußeren Magnete vor Zerstörung.

Der Erfindung liegt die Aufgabe zugrunde, die Temperaturmessung am gefährdeten Spalttopf in Pumpen mit Permanentmagnet-Kupplungen und die Anlaufsicherung (Vermeiden der Gefährdung des Spalttopfes durch den unregelmäßigen Anlauf) direkt an der Wärmequelle bzw. gefährdete Spalttopfstelle beim Anlauf, d.h. unter den rotierenden Magneten durchzuführen.

Die Aufgabe wird erfindungsgmäß dadurch gelöst, daß auf der inneren oder äußeren Oberfläche des Spalttopfes ein Leiter eines Thermoelementes befestigt ist, dessen anderer, den Leiterkreis schließender Leiter vom Spalttopf gebildet ist.

Bei Versuchen wurde festgestellt, daß bei Aufschweißen eines Drahtes auf dem Spalttopf, welcher mit dem Spalttopfmaterial ein Thermopaar bildet, alle Forderungen an eine Temperaturüberwachung erfüllt werden. Unerwartet und überraschend gegenüber bekannten Lösungen ist der geringere und kompensierbare Einfluß des starken Magnetfeldes auf dieses neuartige Thermopaar, so daß mit einfachen elektronischen Maßnahmen die Störung erfolgreich unterdrückt werden kann. Bei Auswertung der entstehenden Thermospannung kann man den Bruch des Thermoelementenpaares Draht-Spalttopf signalisieren, welcher sowohl bei exzentrischem Lauf der Außenmagnete, als auch bei Deformierung des Spalttopfes durch unzulässig hohen Innendruck entstehen kann. Damit ist gleichzeitig eine Anlaufsicherung gegen mechanische Beschädigung der Außenmagnete bzw. des Spalttopfes entstanden.

Besonders vorteilhaft ist es, wenn mindestens eine der Verbindungsstellen zwischen den Leitern unterhalb des Bereiches der Magneten liegt.

Auch wird vorgeschlagen, daß die Verbindungsstelle zwischen den Leitern eine Schweißstelle, Lötstelle oder eine andere starre Befestigung ist. Von größtem Vorteil ist es, wenn mindestens eine der Verbindungsstellen zwischen den Leitern in unmittelbarer Nähe des Bereiches der Magneten liegt. Bei einer vorteilhaften Ausführungsform ist der auf der Oberfläche des Spalttopfes befestigte Leiter ein Drahtstück.

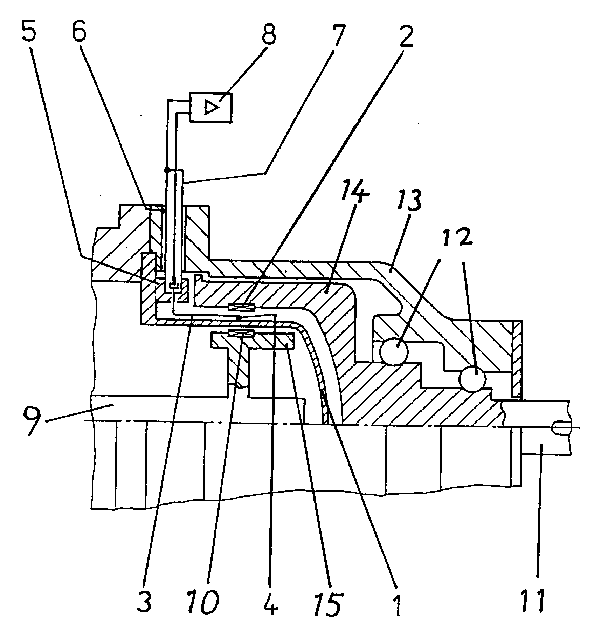

Ein Ausführungsbeispiel der Erfindung ist in der Zeichnung dargestellt und wird nachfolgend näher beschrieben.

Die Figur zeigt die erfindungsgemäße Lösung an der schematisch im Querschnitt dargestellten Permanentmagnet-Kupplung einer Pumpe.

An einer Welle 11 ist ein elektrischer Antriebsmotor befestigt, um eine nur teilweise dargestellte Pumpe über eine magnetische Verbindung anzutreiben. Hierzu ist die Welle 11 durch Lager 12 im Pumpengehäuse 13 drehbar gelagert und erweitert sich zu einem angeformten topfförmigen Teil 14, das einen feststehenden Spalttopf 1 außen umgibt. Im Inneren des Spalttopfes 1 ist die Welle 9 des nicht dargestellten Pumpenlaufrades koaxial gelagert und ist zu einem zylindrischen Teil 15 erweitert, das nahe an der Innenseite des Spalttopfes 1 liegt. An der zylindrischen Außenseite des zylindrischen Teils 15 sind Permanentmagneten 10 nahe dem Spalttopf 1 befestigt, die Permanentmagneten 2 gegenüberliegen, die an der Innenseite des topfförmigen Teils 14 befestigt sind.

Auf der Oberfläche des Spalttopfes 1 ist unter den Außenmagneten 2 das Ende eines Drahtes 3 starr befestigt, vorzugsweise durch Aufschweißen. Der Draht 3 ist isoliert vom Spalttopf 1 an eine Anschlußbuchse 5 geführt, deren Außenpol aus Spalttopfwerkstoff besteht. Das Ende des Drahtes 3 bildet mit dem Spalttopfmaterial ein Thermoelement 4. Durch die radiale Öffnung 6 im Gehäuse 13 der Pumpe wird die gemessene Thermospannung mittels eines Steckers 7 an einen Verstärker 8 weitergeführt. Der Verstärker 8 ist mit einer Einrichtung ausgestattet, welche einen Bruch des Thermoelements anzeigt und hier als Anlaufsicherung der Pumpe dient. Die Größe der Thermoelementenspannung ist ein Maß der Störung des Pumpenbetriebes.

## Patentansprüche

1. Magnetkreiselpumpe mit Übertemperatur- und Anlaufsicherung und einem das Medium fördernden Laufrad, dessen Welle (9) an einem Spalttopf (1) endet und dort Permanentmagnete (10) trägt, die von an der anderen Seite des Spalttopfes (1) liegenden Permanentmagneten (2) angetrieben sind, die mit der Welle (11) des Antriebsmotors verbunden sind, **dadurch gekennzeichnet,** daß auf der inneren oder äußeren Oberfläche des Spalttopfes (1) ein Leiter (3) eines Thermoelementes (1,3,4) befestigt ist, dessen anderer, den Leiterkreis schließender Leiter vom Spalttopf (1) gebildet ist.

2. Magnetkreiselpumpe nach Anspruch 1, **dadurch gekennzeichnet,** daß mindestens eine der Verbindungsstellen (4) zwischen den Leitern (1,3) unterhalb des Bereiches der Magneten (2,10) liegt.

3. Magnetkreiselpumpe nach Anspruch 1 oder 2, **dadurch gekennzeichnet,** daß die Verbindungsstelle (4) zwischen den Leitern (1,3) eine Schweißstelle, Lötstelle oder eine andere starre Befestigung ist.

4. Magnetkreiselpumpe nach Anspruch 1 und 3, **dadurch gekennzeichnet,** daß mindestens eine der Verbindungsstellen (4) zwischen den Leitern (1,3) in unmittelbarer Nähe des Bereiches der Magneten (2,10) liegt.

5. Magnetkreiselpumpe nach zumindest einem der vorhergehenden Ansprüche, **dadurch gekennzeichnet,** daß der auf der Oberfläche des Spalttopfes (1) befestigte Leiter (3) ein Drahtstück ist.

## Claims

1. Magnetic centrifugal pump with an excess temperature and starting safety device and with a rotor delivering the medium, whose shaft (9) terminates at a gap can (1), where it bears permanent magnets (10) driven by permanet magnets (2) disposed at the other side of the gap can (1) and which are connected to the shaft (11) of the driving motor, characterized in that attached to the inner or outer surface of the gap can (1) is a conductor (3) of a thermocouple (1, 3, 4) whose other conductor, closing the conductor circuit, is formed by the gap can (1).

2. Magnetic centrifugal pump according to claim 1, characterized in that at least one of the connecting places (4) between the conductors (1, 3) lies below the zone of the magnets (2, 10).

3. Magnetic centrifugal pump according to claims 1 or 2, characterized in that the connecting place (4) between the conductors (1, 3) is a weld or soldering joint or some other rigid attachment.

4. Magnetic centrifugal pump according to claims 1 and 3, characterized in that at least one of the connecting places (4) between the conductors (1, 3) lies immediately adjacent the zone of the magnets (2, 10).

5. Magnetic centrifugal pump according to at least one of the preceding claims, characterized in that the conductor (3) attached to the surface of the gap can (1) is a piece of wire.

## Revendications

1. Pompe centrifuge magnétique comportant un dispositif de sécurité contre le suréchauffement et pour le démarrage et un rotor transportant le fluide, dont l'arbre (9) se termine à un pot à fente (1) où il porte des aimants permanents (10) qui sont entrainés par des aimants permanents (2) se trouvant de l'autre côté du pot à fente (1), lesquels sont reliés à l'arbre (11) du moteur d'entraînement, caractérisée en ce que sur la surface intérieure ou extérieure du pot à fente (1) est fixé un conducteur (3) d'un thermocouple (1,3,4) dont l'autre conducteur fermant le circuit conducteur est formé par le pot à fente (1).

2. Pompe centrifuge magnétique selon la revendication 1, caractérisée en ce qu'au moins un des points de raccordement (4) entre les conducteurs (1,3) se trouve au-dessous de la zone des aimants (2,10).

3. Pompe centrifuge magnétique selon les revendications 1 ou 2, caractérisée en ce que le point de raccordement (4) entre les conducteurs (1,3) est un point de soudure, un point de brasage ou une autre fixation rigide.

4. Pompe centrifuge magnétique selon les revendications 1 et 3, caractérisée en ce qu'au moins un des points de raccordement (4) entre les conducteurs (1,3) se trouve à proximité immédiate de la zone des aimants (2,10).

5. Pompe centrifuge magnétique selon l'une quelconque des revendications précédentes , caractérisée en ce que le conducteur (3) fixé sur la surface du pot à fente (1) est un fil de fer.
